Europäisches Patentamt

European Patent Office

Office européen des brevets

(11) Veröffentlichungsnummer: **0 036 104**
**B1**

(12) # EUROPÄISCHE PATENTSCHRIFT

(45) Veröffentlichungstag der Patentschrift:
06.11.85

(51) Int. Cl.⁴: **G 01 S 13/80,** G 01 S 7/28

(21) Anmeldenummer: **81101272.3**

(22) Anmeldetag: **21.02.81**

(54) **Zweiwegentfernungsmesssystem.**

(30) Priorität: **13.03.80 DE 3009651**

(43) Veröffentlichungstag der Anmeldung:
**23.09.81 Patentblatt 81/38**

(45) Bekanntmachung des Hinweises auf die Patenterteilung:
**06.11.85 Patentblatt 85/45**

(84) Benannte Vertragsstaaten:
**FR GB IT NL**

(56) Entgegenhaltungen:
**DE - A - 2 216 765**
**DE - A - 2 945 384**
**DE - B - 1 290 605**
**DE - B - 1 929 042**
**DE - B - 2 413 995**
**DE - B - 2 543 151**
**US - A - 3 870 993**

**IBM TECHNICAL DISCLOSURE BULLETIN Band 21, Nr. 2, Juli 1978 D.R. PRUNTY "Automatic Transponder Calibration in DME Ranging Systems" Seiten 546 bis 551 Patents Abstracts of Japan Band 2, Nr. 124, 18.10.1978 Seite 7374E78**

(73) Patentinhaber: **International Standard Electric Corporation, 320 Park Avenue, New York New York 10022 (US)**

(72) Erfinder: **Koller, Wilhelm Johann, Cheruskerstrasse 38, D-3300 Braunschweig (DE)**
Erfinder: **Vogel, Horst, Hindenburgstrasse 33, D-7015 Korntal (DE)**

(74) Vertreter: **Schmidt, Werner, Dipl.-Phys. et al, c/o Standard Elektrik Lorenz AG Patent- und Lizenzwesen Kurze Strasse 8 Postfach 300 929, D-7000 Stuttgart 30 (DE)**

## Beschreibung

Stand der Technik

Die Erfindung geht aus von einem Zweiwegentfernungsmesssystem wie im Oberbegriff des Anspruchs 1 angegeben.

Ein solches Zweiwegentfernungsmesssystem ist beispielsweise das Zweiwegentfernungsmesssystem DME (DME = Distance Measuring Equipment), das in dem Buch «Funksysteme für Ortung und Navigation» von E. Kramar, Verlag Berliner Union GmbH, Stuttgart 1973, auf den Seiten 147 bis 159 beschrieben ist.

Bei diesem DME ist es besonders wichtig, genaue Triggerzeitpunkte ableiten zu können, da hierdurch die Entfernungsmessgenauigkeit bestimmt ist.

Man wählt als Triggerzeitpunkt meist den Zeitpunkt, zu dem der erste Impuls eines DME-Doppelimpulses seinen halben Maximalwert erreicht. Bei den weiteren Überlegungen wird daher nur noch auf den ersten DME-Impuls Bezug genommen.

Es kommt häufig vor, dass der DME-Abfrageimpuls (oder der Antwortimpuls) nicht nur auf direktem Weg zu der DME-Antwortstation (oder zur Abfragestation) gelangt, sondern dass er auch noch an einem oder mehreren Hindernissen reflektiert wird und erst dann zur DME-Antwortstation (oder zur Abfragestation) gelangt.

Dort überlagern sich dann die Direktsignale und die Umwegsignale, und es entsteht ein Impuls, dessen Form vom vorgeschriebenen Verlauf abweicht. Wird weiterhin auf die beschriebene Weise der Triggerzeitpunkt abgeleitet, dann entsteht ein Fehler, der durch die erwähnte Mehrwegausbreitung verursacht ist.

Aufgabe

Es ist Aufgabe der Erfindung, ein Zweiwegentfernungsmesssystem anzugeben, bei dem die durch Mehrwegausbreitung verursachten Fehler reduziert sind.

Lösung

Die Lösung dieser Aufgabe erfolgt mit den im Anspruch 1 angegebenen Mitteln. Vorteilhafte Weiterbildungen sind den abhängigen Ansprüchen zu entnehmen.

Vorteile

Bei dem neuen Zweiwegentfernungsmesssystem ist die Beeinflussung der Messgenauigkeit durch von Mehrwegausbreitungen verursachte Störungen gering. Bei einer Weiterbildung werden nicht durch die durch Mehrwegausbreitung verursachten Fehler (infolge von Impulsverzerrungen) reduziert, sondern auch solche Fehler (Impulsverzerrungen), die dadurch entstehen, dass die Sendeimpulse nicht die vorgeschriebene Form haben, oder die durch die begrenzte Bandbreite der HF-Baugruppen verursacht werden.

An die Toleranz, die für die Impulsform vorgeschrieben ist, müssen keine hohen Forderungen mehr gestellt werden, wodurch auch DME-Geräte für hohe Entfernungsmessgenauigkeiten mit einfachen und somit preiswerten Sendern realisiert werden können. Diese Fehlerreduzierung ist auch dann wirksam, wenn keine durch Mehrwegausbreitung verursachten Fehler vorhanden sind.

Beschreibung

Die Erfindung wird anhand der Zeichnungen beispielsweise näher erläutert. Es zeigt:

Fig. 1 Impulsdarstellungen zur Erläuterung der Erfindung und

Fig. 2 ein Blockschaltbild eines Teils einer neuen DME-Abfragestation.

Zur Erläuterung der Erfindung wird auf das DME-System, das nachfolgend kurz erläutert wird, Bezug genommen.

Bei einem DME-System wird in der DME-Abfragestation, die sich an Bord eines Luftfahrzeugs befindet, ein DME-Abfragesignal, das aus einem Doppelimpuls besteht, erzeugt. Man erzielt eine hohe Entfernungsgenauigkeit, wenn die Hüllkurven der Impulse einen asymmetrischen $cos^2$ – $cos^2$-förmigen Amplitudenverlauf haben. Dieser Hüllkurvenverlauf ist jedoch nicht Voraussetzung für das neue Triggerverfahren.

In der DME-Abfragestation wird ein erstes Triggersignal üblicherweise erzeugt, wenn der erste Impuls des Sendeimpulspaares seinen halben Maximalwert erreicht. Ein zweites Triggersignal wird erzeugt, wenn der erste Impuls des Impulspaares des von einer DME-Antwortstation ankommenden DME-Antwortsignals seinen halben Maximalwert erreicht. Die Zeit tg zwischen den beiden Triggersignalen ist der Entfernung zwischen DME-Abfragestation und DME-Antwortstation proportional.

In der Zeit tg sind ausser der Signallaufzeit zwischen den beiden Stationen auch interne Gerätelaufzeiten enthalten, die bei der Entfernungsbestimmung berücksichtigt werden, auf die jedoch hier nicht näher eingegangen wird. Für die Erfindung ist es lediglich wichtig zu wissen, dass die Entfernungsmessgenauigkeit wesentlich von der genauen Bestimmung der Triggerzeitpunkte abhängt. Bei der weiteren Beschreibung wird der zweite Impuls eines DME-Impulspaares nicht mehr berücksichtigt, da er für die Entfernungsauswertung gemäss dem Ausführungsbeispiel ohne Bedeutung ist.

Die Beschreibung der Erfindung erfolgt für eine DME-Abfragestation. In der DME-Antwortstation werden entsprechende Massnahmen durchgeführt. Während in der DME-Abfragestation die Zeit tg um einen Korrekturwert korrigiert wird, wird in der DME-Antwortstation der Korrekturwert dazu verwendet, die Zeit zwischen dem Empfang eines DME-Abfragesignals und der Abstrahlung eines DME-Antwortsignals so zu regeln, dass das Antwortsignal zum richtigen Zeitpunkt abgestrahlt wird.

Die Signale breiten sich zwischen Abfrage- und Antwortstation nicht nur auf direktem Weg aus, sondern sie werden auch an Hindernissen reflektiert und gelangen somit über Umwege zur anderen Station. In diesem Fall besteht das tatsächlich empfangene Signal aus dem direkten Signal (d.h. dem Signal, das auf direktem Weg zur anderen Station gelangt ist) und den indirekten Signalen. Es ist einzusehen, dass das resultierende Signal nicht mehr seine ursprüngliche Form hat.

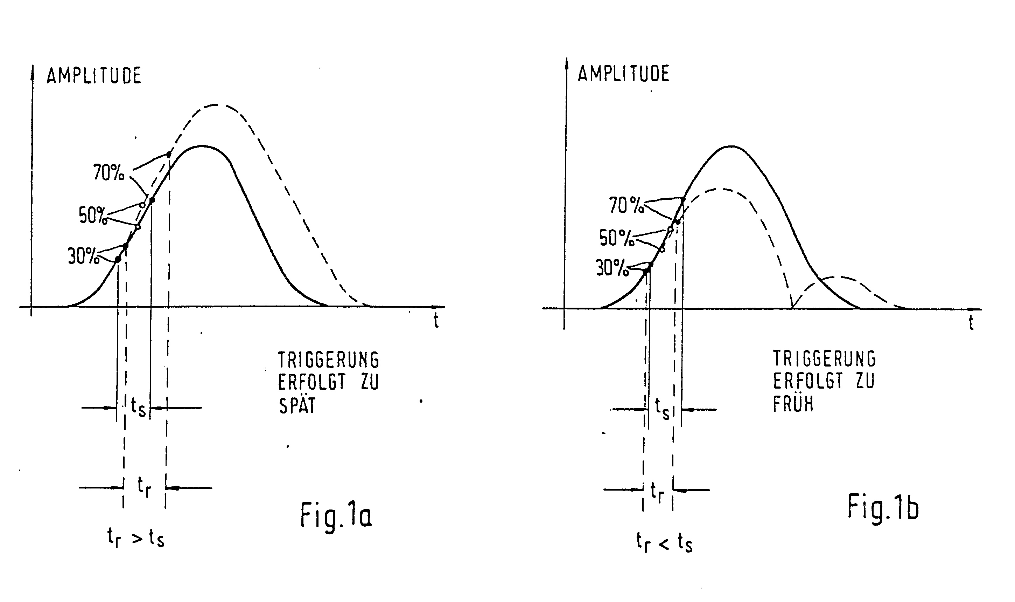

In der Fig. 1a ist das Signal, das man ohne störende Reflexionen empfangen würde, mit durchgezogenen Linien dargestellt, und das tatsächlich empfangene Signal ist mit gestrichelten Linien dargestellt.

Hierbei wurde angenommen, dass der elektrische Phasenunterschied zwischen den hochfrequenten Trägerschwingungen der einander überlagerten Signale 0° ist. Wie bereits erwähnt, wird beim Erreichen der halben Maximalamplitude ein Triggersignal ausgelöst (es sind jedoch auch andere Triggerkriterien möglich). Dieser Wert ist bei dem durch Überlagerung entstandenen Signal grösser, und das Triggersignal wird später ausgelöst (verglichen mit dem Fall, dass nur das direkte Signal vorhanden ist). Dadurch entsteht ein unerwünschter Entfernungsmessfehler, wenn nicht, wie nachfolgend beschrieben, besondere Massnahmen ergriffen werden.

In der Fig. 1a sind nicht nur die Zeitpunkte eingezeichnet, zu denen der reale (überlagerte) Impuls und der direkte (ungestörte) Impuls ihre halbe Maximalamplitude (50%) erreichen, sondern auch die Zeitpunkte, zu denen sie 30% bzw. 70% ihrer Maximalamplitude erreichen. Definiert man die Anstiegszeit als die Zeit, die zwischen dem Erreichen des 30%-Punktes und des 70%-Punktes vergeht, dann ist die Anstiegszeit $t_s$ des ungestörten Impulses kleiner als die Anstiegszeit $t_r$ des tatsächlich vorhandenen (gestörten) Impulses. Die Differenz zwischen der tatsächlichen Anstiegszeit $t_r$ und der Referenz-Anstiegszeit $t_s$ wird dazu verwendet, einen Korrekturwert zu erzeugen.

In der DME-Antwortstation wird die Referenz-Anstiegszeit $t_s$ gespeichert. Die tatsächliche Anstiegszeit $t_r$ wird gemessen, und es wird die Differenz $t_k' = t_s - t_r$ berechnet. Die Grösse $t_k'$ ist jedoch nur ein Mass für die Abweichung des tatsächlichen Triggerzeitpunkts vom Soll-Triggerzeitpunkt und nicht die Abweichung selbst. Die Differenz $t_k'$ muss folglich noch mit einem Faktor M multipliziert werden, um den gewünschten Korrekturwert $t_k = M \times t_k'$ zu erhalten. M hängt von der Impulsform, der Wahl der Schwellwerte (im vorliegenden Fall 30% und 70%) und dem Wert $t_k'$ ab. Es ist möglich, die $t_k'$ in verschiedene Wertebereiche, z.B. vier, einzuteilen und jedem Wertebereich einen Wert M zuzuordnen. Bei einem cos²-förmigen Verlauf der Hüllkurve und bei Schwellwerten von 20% und 50% kann M = 3,3 gewählt werden.

Zur Entfernungsauswertung wird die gemessene Zeit $t_g$ um den Wert $t_k$ korrigiert und zur weiteren Entfernungsbestimmung, die auf bekannte Weise erfolgt, wird der korrigierte Wert

$$t_b = t_g + t_k$$

verwendet.

In der Fig. 1b sind wie in der Fig. 1a ein direkt empfangener Impuls und ein durch Überlagerung entstandener Impuls dargestellt. Hier ist jedoch im Gegensatz zur Fig. 1a angenommen, dass die hochfrequenten Trägerschwingungen der einander überlagerten Impulse um 180° gegeneinander phasenverschlossen sind. Im übrigen gilt das zu Fig. 1a Gesagte.

Zur Bestimung des Korrekturwerts wurde die Anstiegszeit zwischen zwei Schwellwerten ausgewertet.

Da bei den meisten der vorhandenen DME-Geräte die abgestrahlten Impulse infolge von zugelassenen Toleranzen und Verzerrungen bei der Impulsverarbeitung nur sehr selten die vorgegebene Idealform erreichen, ist es möglich, die Bestimmung des Korrekturwerts $t_k$ noch weiter zu verbessern. Es wird hierbei wieder angenommen, dass zum Vergleich die Anstiegszeiten herangezogen werden.

Es wurde bisher davon ausgegangen, dass in der DME-Abfragestation ein konstanter Referenzwert gespeichert ist. Dieser Wert stimmt jedoch nicht immer mit dem entsprechenden Wert des ungestörten Impulses überein, da auch z.B. die Anstiegszeit des ungestörten Impulses innerhalb gewisser Toleranzen schwanken darf. Das gilt sowohl für die Impulse des Abfrage- als auch des Antwortsignals.

Wenn die Korrektur in der Abfragestation durchgeführt werden soll, dann muss dort die Anstiegszeit des von der Antwortstation abgestrahlten ungestörten Impulses möglichst genau bekannt sein.

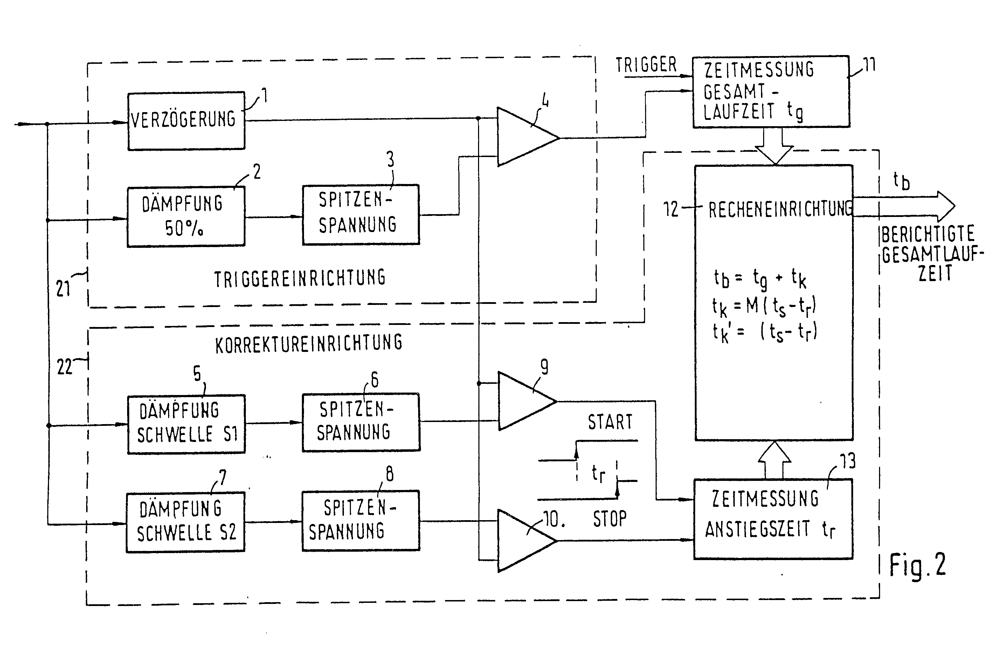

Deshalb wird in der Antwortstation die Anstiegszeit ermittelt und in digitaler Form zur Abfragestation übertragen. Die digitalen Daten können auf verschiedene an sich bekannte Weisen übertragen werden. Eine Möglichkeit ist in der Druckschrift «DME-gestütztes Landesystem DLS» der Firma Standard Elektrik Lorenz AG, Stuttgart 1975, beschrieben. Als Sender und Empfänger können ebenfalls die von dort bekannten verwendet werden. Die Bestimmung der Anstiegszeit des Impulses in der Bodenstation kann wie nachfolgend (anhand der Fig. 2 für die Abfragestation erläutert) beschrieben erfolgen. Die jetzt in der Abfragestation bekannte exakte Anstiegszeit des von der Antwortstation abgestrahlten DME-Impulses wird so lange gespeichert, bis von der Antwortstation ein neuer Wert übertragen wird.

Die Anstiegszeit des von der Abfragestation abgestrahlten DME-Abfrageimpuls kann in der Abfragestation auf gleiche Weise ermittelt werden, zur Antwortstation übertragen und dort als Referenzwert verwendet werden. Die Übertragung der digitalisierten Sendeimpulsform zur jeweils anderen Station gestattet eine Erweiterung der Impulsformtoleranzen, weil in der jeweils anderen Station ein Korrekturwert aus dem Vergleich der Sendeimpulsform mit der Referenzimpulsform errechnet werden kann.

Gegenüber der zuerst beschriebenen Lösung, bei der als Referenzwert ein konstanter Wert verwendet wird, erhält man auch eine Verbesserung, wenn man als Referenzwert in der Abfragestation einen aus dem eigenen Abfragesendeimpuls abgeleiteten Wert (z.B. die Anstiegszeit) verwendet. Es entsteht dann bei der Ableitung des Triggerzeitpunkts ein Fehler. Ein ähnlicher Fehler entsteht in der Antwortstation.

Der ermittelte Korrekturwert in der Abfragestation hat ein umgekehrtes Vorzeichen wie in der Antwortstation und er hebt sich somit auf. Ein einfaches Rechenbeispiel soll dies erläutern:

|  | Sollwert | Abfrage-impuls | Antwort-impuls |
|---|---|---|---|
| Anstiegszeit zwischen zwei vorgegebenen Schwellwerten | 500 ns | 478 ns | 542 ns |

Vergleich in der Antwortstation:

a) $t_k' = 542\,ns - 478\,ns = 64\,ns$

Wenn der Triggerzeitpunkt um diesen Wert korrigiert wird, wird der Antwortimpuls zu spät abgestrahlt.

Vergleich in der Abfragestation:

b) $t_k' = 478\,ns - 542\,ns = -64\,ns$

Der Triggerzeitpunkt zur Abstrahlung des Antwortsignals lag in der Antwortstation (wenn eine Korrektur nach a) durchgeführt wurde) um 64 ns zu spät. Jetzt wird $t_g$ nochmals um 64 ns korrigiert, jedoch mit anderem Vorzeichen. Man erhält also:

$$t_g = t_g' + 64\,ns\ (\text{Korrektur in der Antwortstation})$$
$$-64\,ns\ (\text{Korrektur in der Abfragestation}) = t_g'$$

Mit diesen beiden Korrekturen erhält man also den korrekten Wert für $t_g$. Im Gegensatz zu dem Vergleich mit einem konstanten Sollwert oder mit dem realen Wert für die Anstiegszeit des Impulses ist es hier notwendig, dass diese Art der Korrektur sowohl in der Abfrage- als auch in der Antwortstation durchgeführt wird. Bei den anderen Korrekturen erhält man zwar die beste Korrektur auch nur dann, wenn man in beiden Stationen die Korrektur durchführt. Man erhält jedoch bereits auch schon Verbesserungen, wenn nur in einer Station eine Korrektur durchgeführt wird.

Bei den obigen Berechnungen wurde angenommen, dass auf der Übertragungsstrecke keine Reflexionen auftreten, die eine Impulsüberlagerung zur Folge haben (es wurde mit unveränderten Anstiegszeiten gerechnet). Treten diese auf, dann erhält man in der Abfrage- bzw. Antwortstation unterschiedliche Korrekturwerte. Die Abweichung von den unter a) und b) angegebenen Werten bewirkt dann eine Korrektur der durch die Mehrwegausbreitung verursachten Störung. Diese Korrektur ist der anhand der Gleichungen erläuterten Korrektur überlagert.

Den Referenzimpuls oder die zur Korrektur notwendigen Vergleichsdaten kann man auch dadurch erhalten, dass man aus den Werten der empfangenen Impulse einen Durchschnittswert bildet und diesen zum Vergleich heranzieht.

Verwendet man wieder die Anstiegszeit als Vergleichswert, dann misst man von mehreren empfangenen (gestörten) Impulsen die Anstiegszeit. Der Mittelwert von mehreren gemessenen Anstiegszeiten wird als Referenzwert verwendet.

Es ist auch möglich, verschiedene der beschriebenen Korrekturmöglichkeiten zu kombinieren. Nachfolgend wird hierfür ein Beispiel angegeben. Die Abfragestation verwendet als Referenz die fest vorgegebene Sollanstiegszeit des von der Antwortstation abgestrahlten Antwortimpulses. Die Antwortstation ist so ausgebildet, dass sie Antwortimpulse erzeugt, die innerhalb sehr enger Toleranzen liegen. Zum Vergleich, der zur Korrektur notwendig ist, wird die fest vorgegebene Sollanstiegszeit verwendet. Bei dieser Art der Korrekturen in der Antwort- und Abfragestation entsteht hierbei ein Fehler, weil die von der Abfragestation abgestrahlten Impulse nicht immer ihren vorgeschriebenen Wert haben. Da jedoch in der Abfragestation die tatsächliche Anstiegszeit der von ihr abgestrahlten Impulse gemessen werden kann, kann dieser Fehler berechnet und bei der Entfernungsmessung berücksichtigt werden.

Nachfolgend wird anhand der Fig. 2 der Teil einer DME-Abfragestation, in dem die Korrektur durchgeführt wird, erläutert. In dem zitierten Buch von E. Kramar ist auf Seite 154 das Blockschaltbild einer DME-Abfragestation dargestellt. Das Ausgangssignal des ZF-Verstärkers ist das Eingangssignal der in Fig. 2 dargestellten Einrichtung. Dieses Signal wird einer Triggereinrichtung 21 und einer Korrektureinrichtung 22 zugeführt. In der Triggereinrichtung 21 wird es einerseits einer Verzögerungseinrichtung 1 und einer Dämpfungseinrichtung 2, der ein Spitzenspannunggleichrichter 3 nachgeschaltet ist, zugeführt. Die Ausgangssignale der Verzögerungseinrichtung 1 und des Spitzenspannungsgleichrichters 3 werden einer Amplitudenvergleichseinrichtung 4 zugeführt, die dann ein Ausgangssignal, welches das Triggersignal ist, abgibt, wenn ihre beiden Eingangssignale gleich sind.

Die Verzögerung ist etwas grösser als die Anstiegszeit des Impulses gewählt. Die Dämpfung hängt ebenfalls vom gewünschten Schwellwert ab. Die Dämpfung ist im vorliegenden Fall zu 50% gewählt. Die Amplitudenvergleichseinrichtung gibt also ein Triggersignal ab, wenn der Impuls seine halbe Maximalamplitude erreicht hat. Eine ausführliche Beschreibung der Bestimmung des Zeitpunkts, zu dem die halbe Maximalamplitude erreicht wird, ist in der DE-PS 1 290 605 enthalten.

Der Triggerimpuls wird einer Zeitmesseinrichtung 11 zugeführt, die bereits zum Zeitpunkt der Abstrahlung des Abfragesignals ein Triggersignal, nämlich das Startsignal, erhält. Das oben erwähnte Triggersignal ist das Stoppsignal. Aus der gemessenen Zeit $t_g$, in der geräteinterne Laufzeiten enthalten sind, wird die Entfernung der Abfragestation zur Antwortstation ermittelt.

Wie bereits erwähnt, wird das ZF-Signal auch der Korrektureinrichtung 22 zugeführt, in der ein Korrekturwert ermittelt wird. Im vorliegenden Fall ist als Vergleichswert die Sollanstiegszeit $t_s$ des Impulses zwischen einem ersten Schwellwert (z.B. S 1 = 30% der maximalen Impulsamplitude) und einem zweiten Schwellwert (z.B. S 2 = 70%) gewählt. In der Korrektureinrichtung 22 wird dann das Videosignal einerseits einer ersten Dämpfungseinrichtung 5 und andererseits einer zweiten Dämpfungseinrichtung 7, denen jeweils Spitzenspannungsgleichrichter 6, 8 nachgeschaltet sind, zugeführt. Die Ausgangssignale der Spitzenspannungsgleichrichter 6, 8 werden jeweils Amplitudenvergleichseinrichtungen 9, 10 zugeführt, die als zweites Eingangssignal das Ausgangssignal der Verzögerungseinrichtung 1 erhalten. Die Ausgangssignale der Amplitudenvergleichseinrichtungen sind das Start- und das Stoppsignal für eine Zeitmesseinrichtung 13. Die in der Zeitmesseinrichtung 13 gemessene Zeit $t_r$ ist die Anstiegszeit des empfangenen Impulses zwischen den zwei genannten Schwellwerten. In einer Recheneinrichtung 12 werden die bereits genannten Werte $t_k'$, $t_k$ und $t_b$ berechnet. Aus der berichtigten Zeit $t_b$ wird auf bekannte Weise die Entfernung berechnet.

In dem Ausführungsbeispiel kann die zweite Schwelle S 2 auch 50% sein. Es lassen sich dann die Dämpfungseinrichtung 7, der Spitzenspannungsgleichrichter 8 und die Amplitudenvergleichseinrichtung 10 einsparen. Das Ausgangssignal der Amplitudenvergleichseinrichtung 4 wird dann zusätzlich der Zeitmesseinrichtung 13 zugeführt.

Es wurde bisher angenommen, dass die Korrektur in einer oder in beiden Stationen durchgeführt wurde, d.h. es wurde der Triggerzeitpunkt zur Abstrahlung des Antwortsignals und/oder die Gesamtlaufzeit korrigiert. Für besondere Fälle ist es besonders vorteilhaft, in der Antwortstation die Werte $t_k$ oder $t_k'$ zu ermitteln und diesen Wert zur Abfragestation zu übertragen. Wird $t_k'$ übertragen, dann wird in der Abfragestation $t_k = M \times t_k'$ berechnet. Die Gesamtlaufzeit wird dann in der Abfragestation wie folgt berechnet:

$$t_b = t_g + t_k \text{ (Abfrage)} + t_k \text{ (Antwort)}$$

mit

$t_k$ (Abfrage): Korrekturwert, der in der Abfragestation ermittelt wird;

$t_k$ (Antwort): Korrekturwert, der in der Antwortstation ermittelt und zur Abfragestation übertragen wird. Falls zur Abfragestation $t_k'$ übertragen wurde, ist $t_k$ (Antwort) der in der Abfragestation berechnete Wert $t_k$ (Antwort) = $M \times t_k'$.

Es ist besonders vorteilhaft, wenn $t_k$ oder $t_k'$

von der Antwort- zur Abfragestation adressiert oder synchron zu den Antwortsignalen übertragen werden.

## Patentansprüche

1. Zweiwegentfernungsmesssystem mit mindestens einer Abfrage- und mindestens einer Antwortstation, die jeweils impulsförmige Signale abstrahlen und empfangen, bei dem die Entfernung zwischen Abfrage- und Antwortstation in der Abfragestation aus der Gesamtlaufzeit $t_g$ von Abfrage- und Antwortimpulsen ermittelt wird und bei dem in der Antwort- bzw. Abfragestation jeweils eine Einrichtung (21) zur Erzeugung eines Triggersignals aus einem empfangenen Impuls vorgesehen ist, dadurch gekennzeichnet, dass zusätzlich zur Einrichtung zur Ableitung des Triggersignals eine weitere Einrichtung (5–10, 13) vorgesehen ist, die die Anstiegszeit ($t_r$) eines empfangenen Impulses zwischen mindestens zwei Schwellwerten (S1, S2), die jeweils durch einen vorgegebenen Prozentsatz der maximalen Impulsamplitude festgelegt sind, ermittelt, und dass dieser mindestens eine ermittelte Wert mit dem ihm entsprechenden Wert ($t_s$) eines Referenzimpulses verglichen und abhängig vom Ergebnis dieses Vergleichs ein Korrektursignal ($t_k$) für die Messfehler infolge Impulsverzerrung abgegeben wird (12).

2. Zweiwegentfernungsmesssystem nach Anspruch 1, dadurch gekennzeichnet, dass von einer Sendestation zu einer Empfangsstation Daten, die die Anstiegszeit zwischen den mindestens zwei Schwellwerten angeben, in digitaler Form übertragen werden, und dass diese digitalen Daten die Daten des Referenzimpulses, mit dem der Vergleich durchgeführt wird, sind.

3. Zweiwegentfernungsmesssystem nach Anspruch 2, dadurch gekennzeichnet, dass die empfangenen digitalen Daten bzw. die daraus sich ergebende Anstiegszeit des Referenzimpulses so lange gespeichert werden, bis neue digitale Daten empfangen werden.

4. Zweiwegentfernungsmesssystem nach Anspruch 1, dadurch gekennzeichnet, dass in der Abfragestation bzw. in der Antwortstation der Sollsendeimpuls der Antwortstation bzw. der Abfragestation der Referenzimpuls ist.

5. Zweiwegentfernungsmesssystem nach Anspruch 1, dadurch gekennzeichnet, dass in der Abfragestation bzw. in der Antwortstation der in der Abfragestation bzw. in der Antwortstation erzeugte Sendeimpuls der Referenzimpuls ist.

6. Zweiwegentfernungsmesssystem nach Anspruch 1, dadurch gekennzeichnet, dass der Referenzimpuls durch Mittelung mehrerer empfangener Impulsdaten gebildet wird.

7. Zweiwegentfernungsmesssystem nach einem der Ansprüche 1–6, dadurch gekennzeichnet, dass das Korrektursignal dazu verwendet wird, den zur Messung der Gesamtlaufzeit verwendeten zweiten Triggerzeitpunkt in der Abfragestation oder die gemessene Gesamtlaufzeit zu korrigieren.

8. Zweiwegentfernungsmesssystem nach einem der Ansprüche 1–6, dadurch gekennzeichnet, dass das Korrektursignal dazu verwendet wird, den Triggerzeitpunkt zur Steuerung des Zeitpunkts der Abstrahlung des Antwortimpulses zu korrigieren.

9. Zweiwegentfernungsmesssystem nach Anspruch 1, dadurch gekennzeichnet, dass das in der Antwortstation erzeugte Korrektursignal zur Abfragestation übertragen wird und dass es dort zur Korrektur der Gesamtlaufzeit verwendet wird.

## Claims

1. Two-way ranging system comprising at least one interrogator and at least one transponder, which respectively transmit and receive pulse signals, wherein the distance between the interrogator and the transponder is determined in the interrogator from the total round-trip transmission time $(t_g)$ of interrogation and reply pulses, and wherein a device (21) for generating a trigger signal from a received pulse is provided in the transponder and in the interrogator, characterized in that in addition to the device for deriving the trigger signal there is provided an additional device (5–10, 13) which determines the rise time $(t_r)$ of a received pulse between at least two threshold valves (S1, S2) each of which is fixed as a prescribed percentage of the maximum pulse amplitude and that this at least one determined value is compared with the corresponding value $(t_s)$ of a reference pulse and, depending on the result of this comparison, a correction signal $(t_k)$ for the measurement errors caused by pulse distortion is delivered (12).

2. A two-way ranging system as claimed in Claim 1, characterized in that data indicating the rise time between the at least two threshold values are transmitted in digital form from a transmitting station to a receiving station and that these digital data are the data of the reference pulse with which the comparison is made.

3. A two-way ranging system as claimed in Claim 2, characterized in that the received digital data or the rise time of the reference pulse derived therefrom are stored until new digital data are received.

4. A two-way ranging system as claimed in Claim 1, characterized in that, in the interrogator or the responder, the nominal transmit pulse of the responder or the interrogator, respectively, is the reference pulse.

5. A two-way ranging system as claimed in Claim 1, characterized in that, in the interrogator or the responder, the transmit pulse generated in the interrogator or the responder, respectively, is the reference pulse.

6. A two-way ranging system as claimed in Claim 1, characterized in that the reference pulse is formed by averaging several received pulse data.

7. A two-way ranging system as claimed in any one of Claims 1 to 6, characterized in that the correcting signal is used to correct the second instant of triggering, which is used to measure the total round-trip transmission time in the interrogator, or the measured total round-trip transmission time.

8. A two-way ranging system as claimed in any one of Claims 1 to 6, characterized in that the correcting signal is used to correct the instant of triggering for controlling the instant of transmission of the reply pulse.

9. A two-way ranging system as claimed in Claim 1, characterized in that the correcting signal produced in the transponder is transmitted to the interrogator and that it is used there to correct the total round-trip transmission time.

## Revendications

1. Système de mesure de distance bidirectionnel comportant au moins une station interrogatrice et au moins une station répondeuse, qui rayonnent et reçoivent chacune des signaux impulsionnels, et dans lequel la distance entre station interrogatrice et station répondeuse est déterminée dans la station interrogatrice, à partir du temps de parcours total $(t_g)$ des impulsions d'interrogation et de réponse, un dispositif (21) pour émettre un signal de déclenchement à partir d'une impulsion reçue étant prévu dans la station répondeuse ou, selon le cas, dans la station interrogatrice, caractérisé en ce qu'il est prévu, en plus du dispositif de formation du signal de déclenchement, un autre dispositif (5–10, 13) qui élabore le temps de montée $(t_r)$ d'une impulsion reçue, ce temps de montée étant compris entre au moins deux valeurs de seuil (S1, S2) qui sont fixées chacune par un pourcentage prédéterminé de l'amplitude maximale de l'impulsion, et en ce que cette valeur élaborée est comparée à la valeur correspondante $(t_s)$ d'une impulsion de référence, et un signal de correction $(t_k)$, pour corriger l'erreur de mesure consécutive à la distorsion d'impulsion, est délivré (12) en fonction du résultat de cette comparaison.

2. Système de mesure de distance bidirectionnel selon la revendication 1, caractérisé en ce que des données indiquant le temps de montée entre au moins deux valeurs de seuil sont transmises, sous forme numérique, d'une station émettrice à une station réceptrice, et en ce que ces données numériques sont les données de l'impulsion de référence utilisée pour la comparaison.

3. Système de mesure de distance bidirectionnel selon la revendication 2, caractérisé en ce que les données numériques reçues ou, selon le cas, le temps de montée de l'impulsion de référence tel qu'il ressort de ces données, est mémorisé jusqu'à ce que de nouvelles données numériques soient reçues.

4. Système de mesure de distance bidirectionnel selon la revendication 1, caractérisé en ce que, dans la station interrogatrice ou dans la station répondeuse, l'impulsion d'émission théorique de la station répondeuse ou, respectivement, de la station interrogatrice, est l'impulsion de référence.

5. Système de mesure de distance bidirectionnel selon la revendication 1, caractérisé en ce que, dans la station interrogatrice ou dans la station répondeuse, l'impulsion d'émission engendrée dans la station interrogatrice ou, respectivement, dans la station répondeuse est l'impulsion de référence.

6. Système de mesure de distance bidirectionnel caractérisé en ce que l'impulsion de référence est formée par établissement de la moyenne de plusieurs données d'impulsions reçues.

7. Système de mesure de distance bidirectionnel selon l'une des revendications 1 à 6, caractérisé en ce que le signal de correction est utilisé pour corriger le deuxième instant de déclenchement dans la station interrogatrice, utilisé pour la mesure du temps de parcours total, ou pour corriger le temps de parcours total.

8. Système de mesure de distance bidirectionnel selon l'une des revendications 1 à 6, caractérisé en ce que le signal de correction est utilisé pour corriger l'instant de déclenchement pour la commande de l'instant du rayonnement de l'impulsion de réponse.

9. Système de mesure de distance bidirectionnel selon la revendication 1, caractérisé en ce que le signal de correction engendré dans la station répondeuse est transmis à la station interrogatrice et en ce qu'il est utilisé dans celle-ci pour corriger le temps de parcours total.

Fig.1a

TRIGGERUNG
ERFOLGT ZU
SPÄT

$t_r > t_s$

Fig.1b

TRIGGERUNG
ERFOLGT ZU
FRÜH

$t_r < t_s$

Fig.2

VERZÖGERUNG 1

DÄMPFUNG 50% 2

SPITZEN-SPANNUNG 3

TRIGGEREINRICHTUNG

4

TRIGGER

ZEITMESSUNG GESAMT-LAUFZEIT $t_g$ 11

12 RECHENEINRICHTUNG

$t_b$

BERICHTIGTE GESAMTLAUF-ZEIT

$$t_b = t_g + t_k$$
$$t_k = M(t_s - t_r)$$
$$t_k' = (t_s - t_r)$$

21

22

KORREKTUREINRICHTUNG

DÄMPFUNG SCHWELLE S1 5

SPITZEN-SPANNUNG 6

9

DÄMPFUNG SCHWELLE S2 7

SPITZEN-SPANNUNG 8

10.

START

$t_r$

STOP

13 ZEITMESSUNG ANSTIEGSZEIT $t_r$

0 036 104

11